Europäisches Patentamt

European Patent Office

Office européen des brevets

(19)

(11) Veröffentlichungsnummer: **0 326 570**
**B1**

(12) **EUROPÄISCHE PATENTSCHRIFT**

(45) Veröffentlichungstag der Patentschrift: 12.09.90

(21) Anmeldenummer: 87906659.5

(22) Anmeldetag: 23.09.87

(86) Internationale Anmeldenummer:
PCT/EP87/00541

(87) Internationale Veröffentlichungsnummer:
WO 88/02703 21.04.88 Gazette 88/09

(51) Int. Cl.⁵: **B 60 D 1/00**, B 60 T 7/20

(54) HÖHENVERSTELLBARE DEICHSEL FÜR FAHRZEUGANHÄNGER.

(30) Priorität: 07.10.86 DE 8627346 u

(43) Veröffentlichungstag der Anmeldung:
09.08.89 Patentblatt 89/32

(45) Bekanntmachung des Hinweises auf die
Patenterteilung:
12.09.90 Patentblatt 90/37

(84) Benannte Vertragsstaaten:
BE DE FR GB IT NL SE

(56) Entgegenhaltungen:
DE-A-2 402 262
DE-B-1 152 030
DE-U-7 832 361
DE-U-7 909 660
FR-A-1 214 136
GB-A- 833 652
GB-A-2 040 847

(73) Patentinhaber: AL-KO KOBER AG
Ichenhauser Strasse 14
D-8871 Kötz 2 (DE)

(72) Erfinder: Wöhrle, Rudolf
Kirchstrasse 2
D-8873 Ichenhausen/Rd. (DE)
Erfinder: Köhler, Robert
Kemnat 126 b
D-8871 Burtenbach (DE)
Erfinder: Werdich, Anton
Südring 44
D-8878 Bibertal-Anhofen (DE)

(74) Vertreter: Ernicke, Hans-Dieter, Dipl.-Ing. et al
Schwibbogenplatz 2b
D-8900 Augsburg (DE)

**Beschreibung**

Die Erfindung betrifft eine höhenverstellbare Deichsel für Fahrzeuganhänger mit den Merkmalen im Oberbegriff des Hauptanspruches.

Eine derartige Deichsel ist aus dem DE—U—78 32 361 bekannt. Die Deichselteile, insbesondere das Zwischenstück, sind als geschlossene Bauteile ausgebildet und jeweils über eine Zahnscheibenpaarung miteinander verbunden. Die Bremsübertragungsvorrichtung besteht aus einem Seil bzw. einem Bowdenzug, der außenseitig entlang der Deichsel verlegt ist. Die Zahnscheibenpaarung ist an jeder Verbindungsstelle nur einmal vorhanden und muß eine dementsprechend hohe Tragkraft der Zähne aufweisen.

Aus der FR—C—1 214 136 ist eine höhenverstellbare Deichsel bekannt, deren Zwischenstück aus zwei parallel und mit Abstand angeordneten Armen besteht. In den Raum zwischen den Armen ragen Beschlagteile des Deichselholms und des Zugkopfes. Die Deichsel besitzt außerdem keine Auflauf- und Bremseinrichtung und keine Bremsübertragungsvorrichtung.

Die GB—C—833 652 zeigt noch eine hohle Deichsel mit einer Auflaufbremseinrichtung und einer gerade durchgehenden Bremsstange. Die Deichsel ist einteilig und besitzt einen starren Deichselholm. Sie läßt sich in der Höhe nicht verstellen.

Die vorliegende Erfindung hat zur Aufgabe, eine betriebssichere und leichter zu handhabende höhenverstellbare Deichsel aufzuzeigen.

Die Erfindung löst diese Aufgabe mit den Merkmalen im Kennzeichen des Hauptanspruchs.

Die Auflösung des Zwischenstücks in ein Paar deckungsgleicher, parallel und in Distanz voneinander angeordneter Arme hat zum einen den Vorteil eines geringeren Baugewichtes bei hoher Stabilität. Zum anderen wird dadurch die Anordnung zweier Zahnscheibenpaarungen an jeder Verbindungsstelle zwischen den Deichselteilen möglich, die die spezifische Belastung der Zahnscheiben verringert und dadurch die Betriebssicherheit wesentlich erhöht.

Die offene Armkonstruktion des Zwischenstücks ermöglicht auch die Überwindung eines weiteren Nachteils der bekannten höhenverstellbaren Deichseln. Deren Zahnköpfe bedingten Bowdenzüge, um die Betätigungskräfte von der Auflauf- oder Handbremseinrichtung auf die Fahrzeugbremsen zu übertragen. Bowdenzüge besitzen einen relativ schlechten Wirkungsgrad, sind aber die einzige bekannte Bremsübertragungsvorrichtung, die mit ausreichender Betriebssicherheit außerhalb der Deichsel geführt werden kann.

Bei der erfindungsgemäßen Deichsel wird die Bremsübertragungsvorrichtung zwischen den Armen des Zwischenstückes und innerhalb des Deichselholms verlegt. Dies ermöglicht den Einsatz eines Bremsgestänges oder Bremsseiles. Diese Bremsübertragungsvorrichtungen haben zwar einen besseren Wirkungsgrad als Bowdenzüge, sie sind aber empfindlich gegen mechanische Beschädigungen und konnten daher an den bekannten höhenverstellbaren Deichseln nicht verwendet werden. An der erfindungsgemäßen Deichsel sind sie jedoch gegen mechanische Beschädigung durch eine Führung im Inneren der Deichselteile geschützt und können daher mit ausreichender Betriebssicherheit selbst unter schwierigen Bedingungen bei Baustellenanhängern und dergleichen eingesetzt werden. Das Bremsgestänge kann im hohlen Deichselholm sogar bis zur Fahrzeugachse geschützt weitergeführt werden. Die erfindungsgemäße Deichsel kann aber auch mit anderen Arten von Betätigungsvorrichtungen, wie Bowdenzügen und dergleichen benutzt werden.

Das zweiarmige Zwischenstück mit den seitlich angeordneten Zahnscheibenpaarungen ermöglicht auch weitere vorteilhafte Gestaltungen der anderen Deichselteile und der Bremseinrichtung.

Mit der erfindungsgemäßen hohlen Kastenform des Deichselholmes können mehrere Vorteile zugleich erreicht werden. Der Deichselholm kann durch Verwendung zweier unterschiedlicher U-Profile auch in hohem Maß biegegünstig gestaltet werden. Die zur Fahrzeugachse hin ansteigende Höhe des Deichselholmes kommt dabei auch der kraft- und übersetzungsgünstigen schrägen Lage des Bremsgestänges entgegen. Bei dem erfindungsgemäßen Deichselholm läßt sich ferner auch auf einfache Weise am zwischenstückseitigen Ende eine schräg nach oben gerichtete Abbiegung anbringen, die die Bodenfreiheit des Fahrzeuganhängers wesentlich verbessert. Hierdurch wandern die Zahnscheibenpaarungen nach oben, was außer einer Verringerung der Beschädigungsgefahr auch ergonomische Vorteile beim Verstellen der Deichsel mit sich bringt.

Die Hohlform der Deichselteile ermöglicht ferner Verbesserungen an der Bremsübertragungsvorrichtung, insbesondere in Form eines Bremsgestänges. Dieses benötigt als starres Bauteil Umlenkhilfen entsprechend der Höhenverstellbarkeit der Deichsel. Hierfür sind schwenkbar gelagerte Umlenkhebel vorgesehen, die zum einen geschützt im Inneren der Deichselteile untergebracht werden können und deren Schwenkachsen in kinematisch günstiger Weise mit den Verstellachsen der Deichselteile zusammenfallen. Hierdurch kann die Deichsel in beliebiger Weise verstellt werden, ohne daß dies Einfluß auf die Bremscharakteristik hat. Es sind auch Hebelübersetzungen über die Angriffspunkte der Einzelteile des Bremsgestänges möglich, die zu einer Erhöhung der an den Fahrzeugbremsen wirkenden Kräfte gegenüber dem Stand der Technik führen. Damit lassen sich auch viele Bremsprobleme leichter lösen, die durch eine Begrenzung der möglichen Betätigungskräfte oder Betätigungswege an der Auflauf- oder Handbremseinrichtung hervorgerufen werden.

Im weiteren kann auch der Handbremshebel in ergonomisch günstiger Weise getrennt von der Auflaufbremseinrichtung an der tiefliegenden Verbindungsstelle zwischen Deichselholm und Zwischenstück angeordnet sein. Er wirkt dabei auf den gleichen Umlenkhebel ein, an dem auch die Auflaufbremseinrichtung, sofern eine solche vorhanden ist, über das Bremsgestänge angreift.

Die erfindungsgemäße Konstruktion der höhenverstellbaren Deichsel und ihrer Einzelteile gestattet auch den Einsatz eines Gewichtsausgleichs für das Zwischenstück und den Zugkopf, mit dem diese Teile leichter und mit geringeren Kräften gegenüber dem Deichselholm verschwenkt werden können. Selbst bei schweren Anhängerdeichseln ist hierdurch noch eine Einmannverstellung möglich.

In den Unteransprüchen sind vorteilhafte Ausgestaltungen der Erfindung angegeben. Diese beinhalten vor allem auch eine gegenseitige günstige Anpassung der einzelnen Teile der Anhängerdeichsel und der zugehörigen Bremseinrichtung.

Insgesamt wird mit der Erfindung eine betriebssichere Anhängedeichsel geschaffen, die bei belastungsgünstiger Konstruktion leichter baut und einen großen Verstellbereich aufweist. Die erfindungsgemäße Deichsel ist besser für einen rauhen Einsatz im Baustellenbetrieb, in der Landwirtschaft, beim Militär und dergleichen geeignet und bringt zugleich wesentliche ergonomische Vorteile bei der Bedienung mit sich. Nicht zuletzt dient die erfindungsgemäße Deichsel der Erhöhung der Betriebssicherheit des Fahrzeuganhängers durch vorteilhafte Unterstützung und Verbesserung der Bremseinrichtung.

Die verschiedenen Teile der Anhängerdeichsel und der Bremseinrichtung bringen in ihrem Zusammenwirken den vorgenannten vorteilhaften Gesamterfolg. Sie können mit ihren jeweiligen spezifischen Vorteilen aber auch selbständig Verwendung finden. So kann das Zwischenstück auch mit einem anderen Deichselholm oder einer anderen Bremsübertragungseinrichtung eingesetzt werden. Desgleichen hat die Konstruktion des Deichselholmes als biegegünstiges Kastenprofil und mit der Abbiegung Vorteile auch bei Anhängerdeichseln, die in den übrigen Teilen anders gestaltet sind.

Die Erfindung ist in den Zeichnungen beispielsweise und schematisch dargestellt. Im einzelnen zeigen:

Fig. (1): eine Seitenansicht eines Fahrzeuganhängers mit höhenverstellbarer Deichsel,

Fig. (2): eine Draufsicht auf die Deichsel von Fig. (1),

Fig. (3—6): Seitenansichten sowie Längs- und Querschnitte des Zwischenstücks gemäß Schnittlinien IV—IV, V—V und VI—VI aus Fig. (3),

Fig. (7—8): eines Seitenansicht und einen Querschnitt des Deichselholmes gemäß Schnittlinie VIII—VIII aus Fig. (7) und

Fig. (9—12): mehrere Längsschnitte und einen Querschnitt gemäß Schnittlinie XI—XI von der Verbindungsstelle zwischen Deichselholm und Zwischenstück mit Gewichtsausgleich und Umlenkhebel.

Fig. (1) zeigt in Seitenansicht einen Fahrzeuganhänger mit einer höhenverstellbaren Deichsel (1), einer Fahrzeugachse (8) und einem Aufbau (2). Derartige Fahrzeuganhänger finden in der Landwirtschaft, beim Militär, im Baubetrieb und dergleichen Gebieten Verwendung. Im gezeigten Ausführungsbeispiel stellt der Aufbau (2) beispielsweise einen Baustellen-Kompressor dar.

Die höhenverstellbare Deichsel (1) beeinhaltet einen Deichselholm (3), der an der Fahrzeugachse (8), beispielsweise einer Längslenkerachse, angeflanscht oder angeschweißt ist. Der Deichselholm (3) weist auch eine oder mehrere Flanschplatten (9) zur Befestigung des Aufbaus (2) sowie eine Stützradeinrichtung (7) auf. Zur höhenverstellbaren Deichsel (1) gehören ferner noch ein Zwischenstück (4) und ein Zugkopf (5), der seinerseits eine Zugöse (6) zur Verbindung mit dem Zugfahrzeug aufweist. Deichselholm (3), Zwischenstück (4) und Zugkopf (5) sind miteinander um jeweils eine horizontale Achse schwenkbar verbunden und können in der gewünschten Winkellage gegenseitig über je eine doppelte Zahnscheibenpaarung (10, 15) fixiert werden. Hierdurch kann die Deichsel (1) bzw. im einzelnen deren Zugkopf (5) in der Höhe verstellt und auf die Anhängerkupplung des Zugfahrzeuges eingerichtet werden. Fig (2) zeigt beide Endstellungen, wobei die gestrichelte untere Stellung für Kugelkopfkupplungen von PKW's gedacht ist.

Der dargestellte Fahrzeuganhänger besitzt eine Auflaufeinrichtung (17) und eine Handbremseinrichtung (16), die über ein Bremsgestänge (18) die Radbremsen betätigen. Bei anderen Anhängerbauarten, den sogenannten Langsamläufern, kann auch nur eine abnehmbare Handbremseinrichtung als Betriebs- und Feststellbremse vorgesehen sein. Diese ist für den Fahrbetrieb am Zugfahrzeug angeordnet und wird von dort betätigt. Die Verbindung zu den Radbremsen stellt ein Bowdenzug her.

Wie aus den Figuren (1) und (2) sowie im einzelnen den Figuren (3) bis (6) hervorgeht, besteht das Zwischenstück aus zwei Armen (19), die gleich ausgebildet und parallel sowie in Distanz voneinander angeordnet sind. Jeder der beiden Arme (19) ist über eine Zahnscheibenpaarung (10) mit dem Deichselholm (3) und über eine Zahnscheibenpaarung (15) mit dem Zugkopf (5) verbunden. Die beiden Zahnscheibenpaarungen (10) und (15) der beiden Arme (19) fluchten mit ihren Achsen. Sie können jeweils über einen gemeinsamen Spannzapfen (13) und einen Knebel (14) zum Verstellen der Deichsel gelöst und zum Fixieren der gewünschten Stellung wieder zugespannt werden. Die Zahnscheibenpaarungen (10, 15) bestehen jeweils aus einer Zahnscheibe (11) am Deichselholm (3) und am Zugkopf (5) und einer dazu passenden Gegenzahnscheibe (12) an beiden Enden der Arme (19). Die Zahnscheiben (11, 12) weisen auf den Stirnflächen ringförmige Zahnkränze auf und besitzen im Innenbereich Nocken (20), die Anschläge zur Begrenzung der zulässigen Schwenkwinkel darstellen.

Die Arme (19) sind als geschweißte Hohlkastenprofile ausgebildet, die sich keilförmig über die Länge zur Zahnscheibenpaarung (10) hin verbreitern und bei geringem Gewicht eine hohe Verwindungs- und Biegesteifigkeit aufweisen. Figur (4) zeigt einen Längsschnitt durch einen Arm (19) gemäß Figur (3) entlang der Schnittlinie IV—IV. In Figur (5) und (6) sind im weiteren Querschnitte des Armes (19) entsprechend den Schnittlinien V—V und VI—VI dargestellt.

Das Kastenprofil der Arme (19) wird im wesentlichen von einem C-förmigen Grundprofil (21) gebildet, dessen Flansche im Bereich der Gegenzahnscheiben (12) zurückspringen und auch nicht ganz bis zu den Enden des Grundprofils (21) reichen. An die beiden Flansche ist unter Bildung der Kastenform ein Deckprofil (22) angeschweißt, das die Gegenzahnscheiben (12) ausspart. Die Gegenzahnscheiben (12) sind jeweils plan mit dem Grundprofil (21) verschweißt und besitzen eine gemeinsame Durchgangsbohrung für die Spannzapfen (13).

Im Bereich der Zahnscheibenpaarung (10) ist die Deckplatte (22) zurückspringend abgewinkelt und mit der Gegenzahnscheibe (12) verschweißt. Am anderen Ende sind Grundprofil (21) und Deckplatte (22) gemeinsam unter Bildung einer Abkröpfung abgewinkelt, wobei die Deckplatte (22) unter Bildung einer Aussparung (23) V-förmig ausgeschnitten ist. Die Abkröpfung der beiden Arme (19) dient der Kompensation der verschiedenen Dicken von Deichselholm (3) und Zugkopf (5). Sie ist so getroffen, daß alle Zahnscheibenpaarungen (10, 15) parallel zueinander angeordnet sind.

Der Deichselholm (3) ist als stirnseitig offenes, hohles Kastenprofil ausgebildet, das besonders verwindungssteif und biegegünstig gestaltet ist. Wie Figur (8) als Querschnitt durch den Deichselholm gemäß Schnittlinie VIII—VIII der Seitenansicht von Fig. (7) zeigt, besteht der Deichselholm (3) aus einem oberen und einem unteren U-Profil (24, 25). Die beiden U-Profile (24, 25) sind mit einander zugekehrten Flanschen angeordnet und in deren Überlappungsbereich verschweißt. Das obere U-Profil (24) weist eine durchgehend gleiche Bauhöhe auf, während sich diejenige des unteren U-Profiles (25) über die Länge verändert. Hierdurch erhält der Deichselholm (3) eine biegegünstige, zur Radachse (8) hin ansteigende Bauhöhe. Die brückenartige Flanschplatte (9) besteht aus zwei Teilen, die oben und seitlich mit dem Deichselholm (3) verschweißt sind.

Der Deichselholm (3) weist an seinem vorderen Ende eine nach oben gerichtete Abbiegung (26) auf, an deren Ende die beiden Zahnscheiben (11) angeordnet sind. Der Deichselholm (3) besitzt eine im wesentlichen rechteckige Querschnittsform und weist dadurch planparallele Seitenflächen für die Lagegerechte Befestigung der beiden Zahnscheiben (11) auf. Diese sind entsprechend den vorgenannten Gegenzahnscheiben (12) der Arme (19) gestaltet.

Der Zugkopf (5) besitzt ebenfalls einen rechteckigen Querschnitt. Er besteht im wesentlichen aus einem U-Profil, an dessen Flanschaußenflächen die beiden planparallelen Zahnscheiben (11) befestigt sind. Im Inneren des Zugkopfes (5) ist die Auflaufeinrichtung (17) untergebracht, die über einen ebenfalls innenliegenden Schwenkhebel (27) auf das Bremsgestänge (18) einwirkt.

Wie die Fig. (1) und (2) sowie (9) bis (12) verdeutlichen, besteht das Bremsgestänge (18) aus einer vom Schwenkhebel (27) betätigten Druckstange (41), die ihrerseits auf einen Schwenkhebel (28) und eine daran angreifende Zugstange (29) einwirkt. Die Zugstange (29) steht über einen weiteren Umlenkhebel (30) mit einer Zugstange (31) in Verbindung, die durch den hohlen Deichselholm (3) zur Fahrzeugachse (8) und den Radbremsen führt. Die Umlenkhebel (28, 30) sind jeweils in geschützter Lage innerhalb der Deichselteile (3, 4, 5) auf den Achsen der Zahnscheibenpaarungen (10, 15) angeordnet. Die Stangen (41, 29, 31) des Bremsgestänges (18) verlaufen ebenfalls in geschützter Lage im Zugkopf (5), zwischen den Armen (19) bzw. im Deichselholm (3). Dies wird ermöglicht durch die an den seitlichen Außenflächen der Deichselteile (3, 4, 5) angeordneten Zahnscheibenpaarungen (10, 15), von denen nur die Spannzapfen (13) ins Innere der Deichselteile (3, 4, 5) ragen.

Für eine kinematisch günstige Kraftumlenkung besitzt der Umlenkhebel (28) zwei im spitzen Winkel zueinander stehende Flügel unterschiedlicher Länge. Am kürzeren greift die horizontal geführte Druckstange (41) an. Der längere, vertikal nach unten ragende Flügel ist mit der Zugstange (29) verbunden, die hierdurch nahe und im wesentlichen parallel zur Unterkante der Arme (19) verläuft. Der andere Umlenkhebel (30) besitzt nur einen Arm, an dem die beiden Zugstangen (29, 31) gemeinsam, aber mit unterschiedlichen Abständen angreifen. Über diese Gestaltung der Umlenkhebel (28, 30) lassen sich Hebelübersetzungen und eine daraus resultierende Erhöhung der Bremskraft realisieren.

Die Zug- und Druckstangen (29, 31, 41) sind jeweils drehbar mit den Umlenkhebeln (28, 30) verbunden. Beim Verschwenken des Zwischenstücks (4) und/oder des Zugkopfes (5) wird das Bremsgestänge (18) mitbewegt, ohne daß sich die Einstellung der Bremseinrichtung ändert.

Die Handbremseinrichtung (16) weist einen Handbremshebel (32) mit einer Feststelleinrichtung und gegebenenfalls einer die Handkraft unterstützenden Gasdruckfeder auf. Wie insbesondere Fig. (11) verdeutlicht, ist der Handbremshebel (32) außerhalb der beiden Zahnscheibenpaarungen (10) auf einem Ansatz des Spannzapfens (13) drehbar gelagert. Der Handbremshebel (32) wirkt bei Betätigung direkt auf den Umlenkhebel (30) ein. Der im Inneren des Deichselholmes (3) gelagerte Umlenkhebel (30) besitzt dazu einen nach außen vorspringenden Flansch (33), an dem der Handbremshebel (32) angreift.

Das Spannen der Zahnscheibenpaarungen (10) erfolgt auf der einen Seite über einen Bund am Spannzapfen (13) und auf der anderen Seite über den Knebel (14). Der Handbremshebel (32) stützt sich gegen die Reaktionskraft der Radbremsen an der ortsfest am Deichselholm (3) angeordneten Feststelleinrichtung (nicht dargestellt) ab. Hierdurch können auch bei angezogener Handbremse die Zahnscheibenpaarungen (10) gelöst und das Zwischenstück (4) verschwenkt werden.

In Fig. (9) und (10) ist ein Gewichtsausgleich (37) für das Zwischenstück (4) dargestellt. Fig. (10) zeigt dabei eine geschnittene Seitenansicht entsprechend der Schnittlinie X—X von Fig. (9).

Im Inneren des Deichselholmes (3) ist neben dem Umlenkhebel (30) ein Stützhebel (38) auf der gleichen Achse schwenkbar gelagert, der stirnseitig aus dem Deichselholm (3) vorragt und stützend zumindest einen der Arme (19) untergreift. Zur Kompensation des Gewichtes von Zwischenstück (4) und Zugkopf (5) ist eine Gasdruckfeder (39) vorgesehen, die sich im Deichselholm (3) abstützt und am Stützhebel (38) angreift. Die Gasdruckfeder (39) sucht den Stützhebel (38) gegen das Gewicht des Zwischenstückes (4) zu drehen, wobei diese Schwenkbewegung durch einen Anschlag (40) begrenzt wird. Hierbei schlägt der Stützhebel (38) mit seiner geraden Oberkante gegen das vordere Ende des Deichselholmes (3).

Der Umlenkhebel (30) und der Stützhebel (38) sind nebeneinander auf einem Stützrohr (34) gelagert, das seinerseits auf dem Spannzapfen (13) gelagert ist. Die Lagerstellen werden im einzelnen durch innere und außere Führungshülsen (35, 36) gebildet. Die inneren Führungshülsen (35) zwischen dem Stützrohr (34) und dem Spannzapfen (13) ragen hierbei durch die Bohrungen in den Seitenwänden des Deichselholmes (3) und den Zahnscheiben (11) nach außen. Das Stützrohr (34) weist demgegenüber einen größeren Durchmesser auf und liegt mit seinen Stirnflächen an den Seitenwänden des Deichselholmes (3) an. Der Umlenkhebel (30) und der Stützhebel (38) besitzen dagegen seitliches Spiel gegenüber den Deichselholmwänden. Dies hat zur Folge, daß beim Spannen der Zahnscheibenpaarung (10) die Spannkräfte durch das Stützrohr (34) geführt werden, wobei die beiden Hebel (30, 38) ihre freie Drehbarkeit behalten.

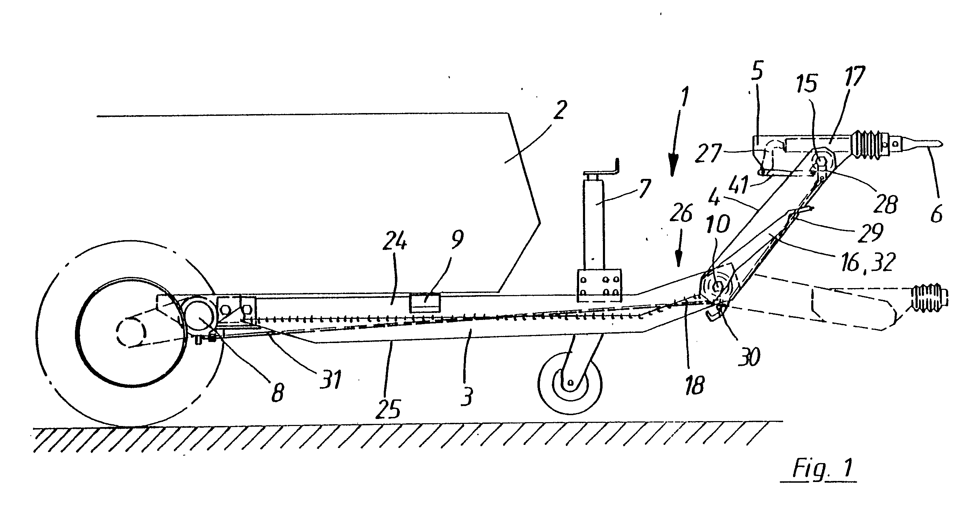

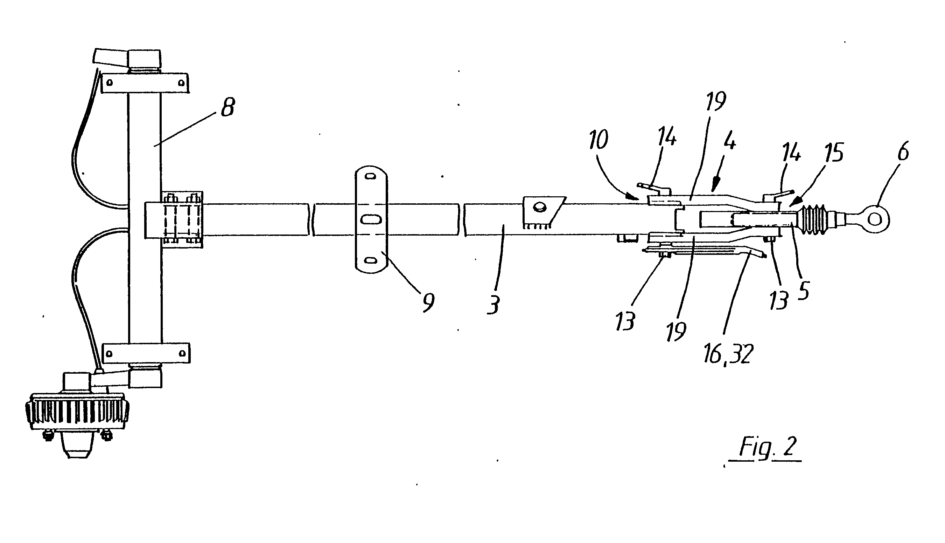

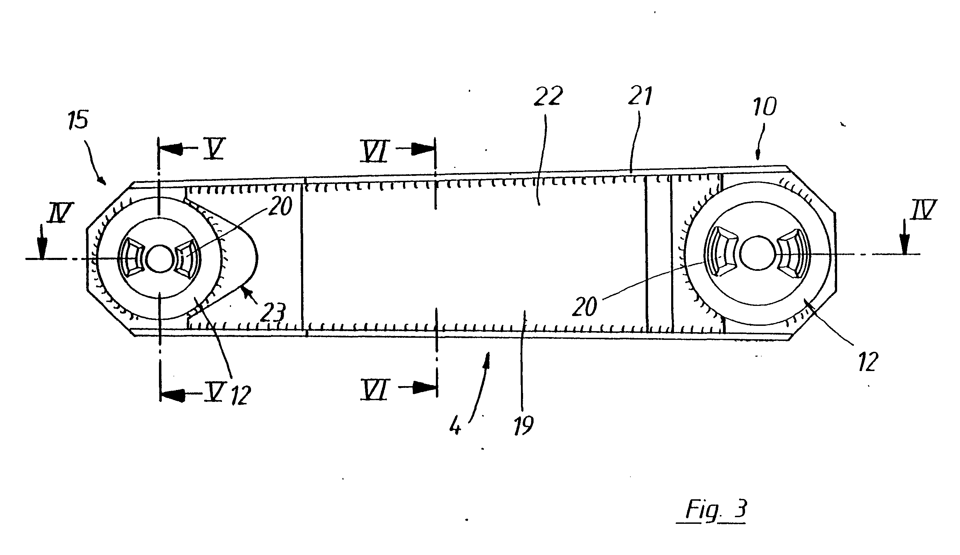

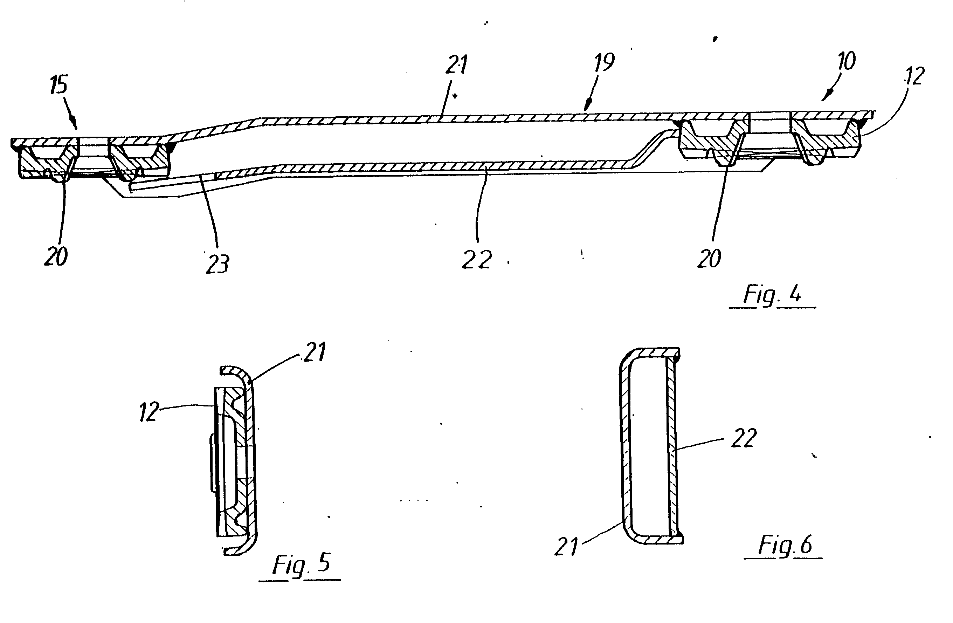

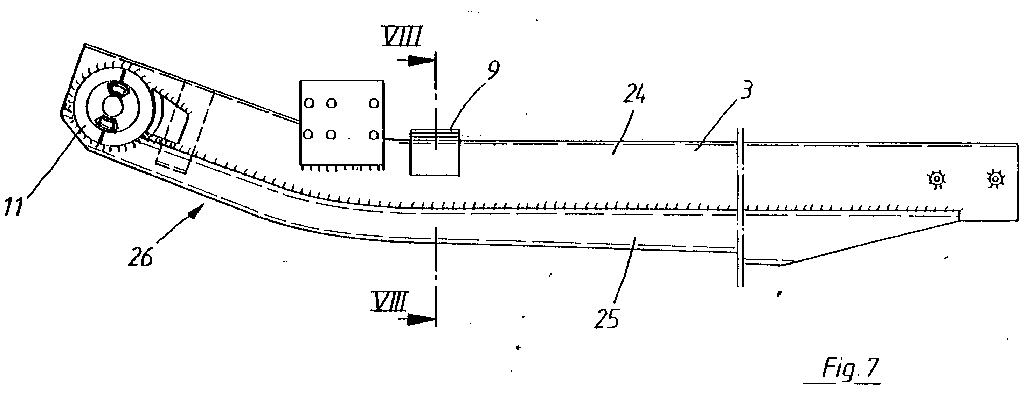

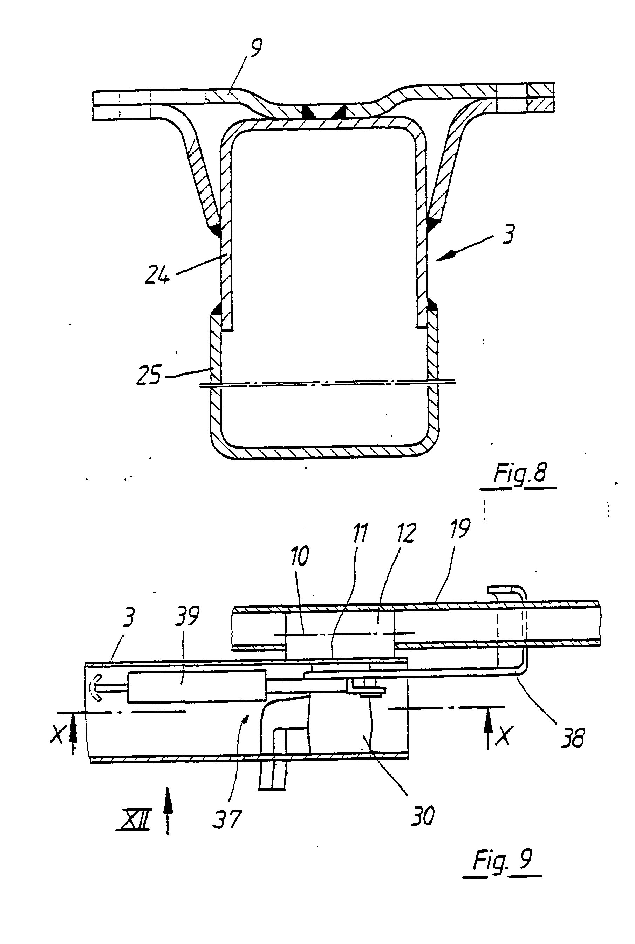

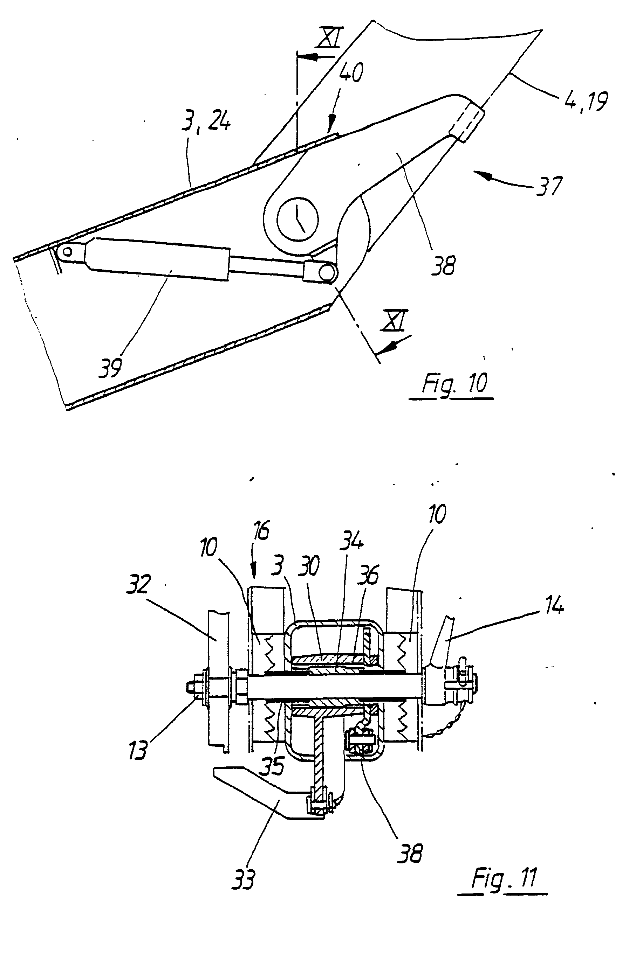

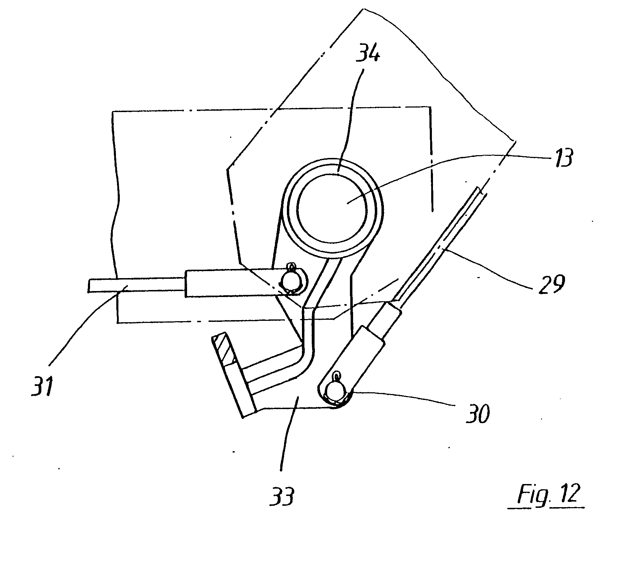

**Patentansprüche**

1. Höhenverstellbare Deichsel für Fahrzeuganhänger mit einer Auflauf- und/oder einer Handbremseinrichtung (17, 16), bestehend aus einem Deichselholm (3), einem Zwischenstück (4) und einem Zugkopf (5), die jeweils über eine Zahnscheibenpaarung (10, 15) miteinander schwenk- und höhenverstellbar verbunden sind, dadurch gekennzeichnet, daß das Zwischenstück (4) ein Paar deckungsgleicher parallel und in Distanz voneinander angeordneter Arme (19) aufweist, die jeweils über zwei eigene Zahnscheibenpaarungen (10, 15) mit dem Deichselholm (3) und dem Zugkopf (5) an deren Seitenflächen verbunden sind, wobei die Achsen der Zahnscheibenpaarungen (10) von Arm zu Arm fluchten und eine als Bremsgestänge (18) oder Seil ausgebildete Bremsübertragungsvorrichtung innerhalb des Deichselholms (3) und zwischen den Armen (19) geführt ist.

2. Höhenverstellbare Deichsel nach Anspruch (1) dadurch gekennzeichnet, daß die Arme (19) jeweils als geschweißte Kastenprofile (21, 22) ausgebildet sind, die zum Zugkopf (5) hin gekröpft sind und an deren Grundprofil (21) unter Aussparung (23) der Kastenform die Gegenzahnscheiben (12) planparallel angeordnet sind.

3. Höhenverstellbare Deichsel nach Anspruch (1), dadurch gekennzeichnet, daß der Deichselholm (3) und der Zugkopf (5) beidseitig planparallele Seitenflächen zur Befestigung ihrer Zahnscheiben (11) aufweisen.

4. Höhenverstellbare Deichsel nach Anspruch (3), dadurch gekennzeichnet, daß der Deichselholm (3) als hohles und stirnseitig offenes Kastenprofil ausgebildet ist, durch das das Bremsgestänge (18) bis zur Fahrzeugachse (8) geführt ist.

5. Höhenverstellbare Deichsel nach Anspruch (4), dadurch gekennzeichnet, daß der Deichselholm (3) aus einem längslaufenden oberen und einem unteren U-Profil (24, 25) besteht, die zu einem rechteckigen Kastenprofil miteinander verbunden sind, das über die Länge eine zur Achse (8) ansteigende Höhe aufweist.

6. Höhenverstellbare Deichsel nach Anspruch (4) oder (5), dadurch gekennzeichnet, daß der Deichselholm (3) an seinem zwischenstückseitigen Ende eine schräg nach oben gerichtete Abbiegung (26) aufweist.

7. Höhenverstellbare Deichsel nach Anspruch (1) und (4), dadurch gekennzeichnet, daß das Bremsgestänge (18, 29, 31, 41) über Umlenkhebel (28, 30) geführt ist, die innerhalb der Deichsel (1) auf den Achsen der Zahnscheibenpaarungen (10) drehbar gelagert sind.

8. Höhenverstellbare Deichsel nach Anspruch (7), dadurch gekennzeichnet, daß die Teile (29, 31, 41) des Bremsgestänges (18) mit einer Hebelübersetzung an den Umlenkhebeln (28, 30) angreifen.

9. Höhenverstellbare Deichsel nach Anspruch (7), dadurch gekennzeichnet, daß der Handbremshebel (32) an der Außenseite des Deichselholms (3) auf der Achse der zugehörigen Zahnscheibenpaarung (10) drehbar angeordnet ist und an einem nach außen vorragenden Flansch (33) des Umlenkhebels (30) angreift.

10. Höhenverstellbare Deichsel nach Anspruch (1) und (4), dadurch gekennzeichnet, daß im Deichselholm (3) ein Gewichtsausgleich (37) für das Zwischenstück (4) angeordnet ist, der einen auf der Achse der Zahnscheibenpaarung (10) schwenkbar gelagerten, federbelasteten (39) Stützhebel (38) aufweist, der zumindest einen der Arme (19) stützend untergreift.

11. Höhenverstellbare Deichsel nach Anspruch (10), dadurch gekennzeichnet, daß am Stützhebel (38) eine im Deichselholm (3) abgestützte Gasdruckfeder (39) angreift und daß der Stützhebel (38) zur Wegbegrenzung einen Anschlag (40) aufweist.

12. Höhenverstellbare Deichsel nach Anspruch (7) und (10), dadurch gekennzeichnet, daß der Stützhebel (38) und der Umlenkhebel (30) nebeneinander auf einem Stützrohr (34) frei drehbar gelagert sind, das seinerseits auf dem Spannzapfen (13) der Zahnscheibenpaarung (10) gelagert und stirnseitig an den Wänden des Deichselholms (3) geführt ist.

13. Höhenverstellbare Deichsel nach Anspruch (12), dadurch gekennzeichnet, daß die beiden Lagerstellen jeweils durch Führungshülsen (35, 36) gebildet sind.

## Revendications

1. Barre d'attelage réglable en hauteur pour des remorques pour véhicules comportant un dispositif de freinage par inertie et/ou un dispositif de freinage manuel (17, 16), et constitué par un longeron (3), un élément intermédiaire (4) et une tête de traction (5), qui sont reliés entre eux respectivement par l'intermédiaire d'un couple de disques dentés (10, 15), de manière à être réglables en rotation et en hauteur, caractérisée par le fait que l'élément intermédiaire (4) comporte un couple de bras superposés, parallèles et distants l'un de l'autre, qui sont reliés respectivement par l'intermédiaire de deux couples particuliers de disques dentés (10, 15) aux longerons (3) de la barre d'attelage et à la tête de traction (5), au niveau des surfaces latérales de ces unités, les axes des couples (10) de disques dentés étant alignés d'un bras à l'autre, et le dispositif de transmission de frein, agencé sous la forme d'une tringlerie de frein (18) ou d'un câble, étant disposé à l'intérieur du longeron (3) de la barre d'attelage et entre les bras (19).

2. Barre d'attelage réglable en hauteur suivant la revendication (1), caractérisée par le fait que les bras (19) sont réalisés respectivement sous la forme de profilés en forme de caissons soudés (21, 22), qui sont coudés en direction de la tête de traction (5) et que les disques dentés antagonistes (12) sont disposés dans des plans parallèles, à proximité du profilé de base (22) des profilés, moyennant l'aménagement d'un évidement (23) de la forme en caisson.

3. Barre d'attelage réglable en hauteur suivant la revendication (1), caractérisée par le fait que le longeron (3) de la barre d'attelage et la tête de traction (5) possèdent, sur leurs deux côtés, des surfaces latérales planes et parallèles pour la fixation de leurs disques dentés (11).

4. Barre d'attelage réglable en hauteur suivant la revendication (3), caractérisée par le fait que le longeron (3) de la barre d'attelage est agencé sous la forme d'un profilé en forme de caisson creux, ou frontalement, dans lequel la tringlerie (98) s'étend jusqu'à l'essieu (8) du véhicule.

5. Barre d'attelage réglable en hauteur suivant la revendication (4), caractérisée par le fait que le longeron (3) de la barre d'attelage est constitué par des profilés longitudinaux supérieur et inférieur en forme de U (24, 25), qui sont reliés entre eux en formant un profilé en forme de caisson rectangulaire qui possède, sur sa longueur, une hauteur qui augmente en direction de l'essieu (8).

6. Barre d'attelage réglable en hauteur suivant la revendication (4) ou (5), caractérisée par le fait que le longeron (3) de la barre d'attelage possède, sur son extrémité tournée vers l'élément intermédiaire, une partie coudée (26) dirigée obliquement vers le haut.

7. Barre d'attelage réglable en hauteur suivant les revendications (1) et (4), caractérisée par le fait que la tringlerie de frein (18, 29, 31, 41) est guidée sur des leviers de renvoi (28, 30) qui sont montés rotatifs à l'intérieur de la barre d'attelage (1), sur les axes des couples de disques dentés (10).

8. Barre d'attelage réglable en hauteur suivant la revendication (7), caractérisée par le fait que les parties (29, 31, 41) de la tringlerie de frein (18) attaquent les leviers de renvoi (28, 30), au moyen d'une transmission à leviers.

9. Barre d'attelage réglable en hauteur suivant la revendication (7), caractérisé par le fait que le levier de frein à main (32) est monté rotatif, sur la face extérieure du longeron (3) de la barre d'attelage, sur l'axe du couple associé de disques dentés (10) et attaque une bride (33) qui fait saillie vers l'extérieur, du levier de renvoi (30).

10. Barre d'attelage réglable en hauteur suivant les revendications (1) et (4), caractérisée par le fait que dans le longeron (3) de la barre d'attelage est disposé un dispositif d'équilibrage des poids (37) pour l'élément intermédiaire (4) qui possède un levier de support (38), qui est monté pivotant sur l'axe du couple de disques dentées (10), est chargé (39) par un ressort et s'engage au-dessous d'au moins l'un des bras (19) pour le soutenir.

11. Barre d'attelage réglable en hauteur suivant la revendication (10), caractérisée par le fait qu'un ressort de pression pneumatique (39) supporté dans le longeron (3) de la barre d'attelage attaque le levier de support (38) et que le levier de support (38) possède une butée (40) limitant la course de déplacement.

12. Barre d'attelage réglable en hauteur suivant les revendications (7) et (10), caractérisée par le fait que le levier de support (38) et le levier de renvoi (30) sont montés de manière à tourner librement côte-à-côte sur un tube de support (34), qui, pour sa part, est tourillonné sur le tenon de serrage (13) du couple de disques dentés (10) et est guidé frontalement contre les parois du longeron (3) de la barre d'attelage.

13. Barre d'attelage réglable en hauteur suivant la revendication 12, caractérisée par le fait que les deux points de support sont constitués respectivement par des douilles de guidage (35, 36).

## Claims

1. Height-adjustable towbar for vehicle trailers, having a run-up and/or a hand brake apparatus (17, 16), comprising a towbar spar (3), an intermediate piece (4) and a draw head (5) which are respectively connected to one another pivotally and height-adjustably via a toothed disc coupling (10, 15), characterized in that the intermediate piece (4) has a pair of conjugate arms (19) which are arranged parallel and spaced from one another and which are respectively connected to the towbar spar (3) and the draw head (5) on the side faces thereof via two separate toothed disc couplings (10, 15), the axes of the toothed disc couplings (10) from arm to arm being flush and a braking transmission apparatus constructed as a brake linkage (18) or cable being guided within the towbar spar (3) and between the arms (19).

2. Height-adjustable towbar according to Claim (1), characterized in that the arms (19) are each constructed as welded box-type profiles (21, 22) which are bent towards the draw head (5) and to the basic profile (21) whereof the counter-toothed discs (12) are arranged plane-parallel, in a recess (23) in the box shape.

3. Height-adjustable towbar according to Claim (1), characterized in that the towbar spar (3) and the draw head (5) have side faces which are plane-parallel on both sides, for securing their toothed discs (11).

4. Height-adjustable towbar according to Claim (3), characterized in that the towbar spar (3) is constructed as a hollow box-type profile open at the end faces, through which box-type profile the brake linkage (18) is guided as far as the vehicle shaft (8).

5. Height-adjustable towbar according to Claim (4), characterized in that the towbar spar (3) comprises a longitudinal upper and a lower U-shaped profile (24, 25) which are connected to one another to form a rectangular box-type profile which has a height ascending to the shaft (8) over the length.

6. Height-adjustable towbar according to Claim (4) or (5), characterized in that the towbar spar (3) has at its end on the intermediate piece side a bent-off section (26) directed obliquely upwards.

7. Height-adjustable towbar according to Claim (1) and (4), characterized in that the brake linkage (18, 29, 31, 41) is guided via shift levers (28, 30) which are rotatably mounted on the axes of the toothed disc couplings (10) within the towbar (1).

8. Height-adjustable towbar according to Claim (7), characterized in that the parts (29, 31, 41) of the brake linkage (18) act on the shift levers (28, 30) with leverage.

9. Height-adjustable towbar according to Claim (7), characterized in that the handbrake lever (32) on the outside of the towbar spar (3) is rotatably arranged on the axis of the associated toothed disc coupling (10) and acts on an outwardly projecting flange (33) of the shift lever (30).

10. Height-adjustable towbar according to Claim (1) and (4), characterized in that, in the towbar spar (3), there is arranged a counterbalance (37) for the intermediate piece (4), which counterbalance has a support lever (38) which is mounted pivotally on the axis of the toothed disc coupling (10), is spring-loaded (39) and grips in supportive manner under at least one of the arms (19).

11. Height-adjustable towbar according to Claim (10), characterized in that a gas pressure spring (39) supported in the towbar spar (3) acts on the support lever (38) and, in that the support lever (38) has a stop (40) for path limitation.

12. Height-adjustable towbar according to Claim (7) and (10), characterized in that the support level (38) and the shift lever (30) are mounted freely rotatably next to one another on a support tube (34) which in turn is mounted on the tension pin (13) of the toothed disc coupling (10) and is guided at its end faces against the walls of the towbar spar (3).

13. Height-adjustable towbar according to Claim (12), characterized in that the two bearing positions are respectively formed by guide sleeves (35, 36).

Fig. 1

_Fig. 2_

2

Fig. 3

Fig. 4

Fig. 5

Fig. 6

EP 0 326 570 B1

VIII

VIII

9

24

3

11

5

26

25

Fig. 7

EP 0 326 570 B1

*Fig.8*

*Fig. 9*

Fig. 10

Fig. 11

Fig. 12

EP 0 326 570 B1